# EUROPEAN PATENT APPLICATION

(11) **EP 0 921 474 A1**
(43) Date of publication of application: **09.06.1999**
(21) Application number: 98122865.3
(22) Date of filing: 02.12.1998
(51) Int. Cl.: G06F 13/42, H04L 12/42

(54) **Data transfer system, switching circuit and adaptre employed in the system, integrated circuit having the system and data transfer method**

(30) Priority: 03.12.1997 JP 33225397
(71) Applicant: NEC CORPORATION, Tokyo (JP)
(72) Inventor: Kaganoi, Teruo, Minato-ku, Tokyo (JP); Kanoh, Toshiyuki, Minato-ku, Tokyo (JP); Harasawa, Akio, Minato-ku, Tokyo (JP)
(74) Representative: Glawe, Delfs, Moll & Partner

(57) **Abstract**

An integrated circuit has a data transfer system which is simple in switching control and timing extraction of transfer. A bus provided between four modules has a bit width the same as number of bits consisting a transfer data. The bus is divided into a plurality of fractions respectively lying between a plurality of modules. Respective divided fractions are connected by adapters. The adapter includes a Flip-flop or the like temporarily holds data to be transmitted from one fraction of the transmission path and outputs to another fraction of the transmission path to form a ring transmission path. Since data flows in a predetermined direction on the bus, control can be simple. Also, since a plurality of modules can perform transmission and reception of data at the same timing, transfer efficiency can be improved significantly.

## Description

### BACKGROUND OF THE INVENTION

### Field of the Invention

The present invention relates to a data transfer system, a switching circuit and an adapter to be used for the system, an integrated circuit incorporating the system, and a data transfer method. More particularly, the invention relates to a data transfer system including a plurality of modules and a transmission path being input and output data exchanged between a plurality of modules, a switching circuit and an adapter to be used for the system, an integrated circuit incorporating the system, and a data transfer method.

### Description of the Related Art

In general, an integrated circuit has a function of a single kind. In order to realize a plurality of kinds of functions, a plurality of kinds of integrated circuits are prepared and these integrated circuits are connected with each other in combination. For connection between the integrated circuits various technologies equivalent to data transfer system may be employed.

When data transfer is performed between a plurality of nodes, a network is established by connecting respective nodes through paths. In this case, it is typical that data flows on the paths in both directions.

In the foregoing network, since data flows on the path in both directions, switching control or extraction of timing in transfer is complicate to cause difficulty in speeding up.

On the other hand, by simply switching sender and recipient in time division, connection becomes point-to-point connection as seeing a certain moment. Therefore, a plurality of modules cannot transfer data simultaneously to make it difficult to improve transfer efficiency.

Furthermore, when number of modules to be connected to the network is increased, wiring length becomes long to be a factor to hinder speeding up.

On the other hand, in Japanese Unexamined Patent Publication No. Showa 58-127246, there has been disclosed a circuit, in which a plurality of arithmetic process modules are coupled with a ring shaped path to perform a series of arithmetic process, has been disclosed. In this circuit, since data flows in only one direction, switching control of transfer or extraction of timing become simple. In such circuit, each module can perform two kinds of operation by switching control of a multiplexer. Namely, an operation to pass through data with respect to the module, and an operation to take the data in each module.

However, the circuit disclosed in the above-identified publication encounters a drawback to make the wiring length quite long, when the data is to be passed through the module. On the other hand, when the data is once taken in each module, it becomes necessary to take data not address to own module to degrade data transfer efficiency.

On the other hand, even in Japanese Examined Patent Publication No. 2-17821, a data processing system, in which a plurality of arithmetic process modules are coupled with a ring shaped path, has been disclosed. In this system, a register is provided for waiting transfer until completion of the arithmetic process.

However, in the system disclosed in the above-identified publication, if transfer is held in waiting state until completion of arithmetic process, data transfer efficiency is degraded.

### SUMMARY OF THE INVENTION

The present invention has been worked out for solving the drawbacks in the prior art. Therefore, it is an object of the present invention to provide a data transfer system which is simple in switching control and extraction of timing of transfer and can facilitate speeding up to achieve high transfer efficiency, a switching circuit and an adapter to be employed in the system, an integrated circuit incorporating the system, and a data transfer method.

According to the first aspect of the present invention, an integrated circuit having a data transfer system comprises:
a plurality of modules;
a transmission path inputting and outputting data to be exchanged between a plurality of modules;
a plurality of adapters respectively corresponding to a plurality of modules and controlling input and output of data for the transmission path, and
the transmission path being divided into a plurality of fractions of the transmission path between the plurality of modules, each of fractions of the transmission path being connected by a plurality of adapters.

According to the second aspect of the present invention, a data transfer system comprising:
a plurality of modules;
a transmission path inputting and outputting data to be exchanged between a plurality of modules;
a plurality of adapters respectively corresponding to a plurality of modules and controlling input and output of data for the transmission path, and
the transmission path being divided into a plurality of fractions of the transmission path between the plurality of modules, each of fractions of the transmission path being connected by a plurality of adapters.

According to the third aspect of the present invention, a data transfer system comprises:
a plurality of modules;
a plurality of storage elements storing data output from the plurality of modules;
switching means for controlling connection state between the plurality of modules and the plurality of storage elements, and
exchanging of data being performed between the module and the storage element connected by a control of the switching means.

According to the fourth aspect of the present invention, a switching circuit for controlling connection state between the plurality of modules and the plurality of storage elements in a data transfer system including a plurality of modules and a plurality of storage elements storing data output from the plurality of modules, comprises:
a module management table holding information indicative of correspondence of exchanging of data between the modules to perform exchange of the data;
a memory management table holding information indicative of use state of respective of the plurality of storage elements, and
one of the plurality of modules and one of the plurality of storage elements being connected with reference to storage content of both tables.

According to the fifth aspect of the present invention, a data transfer system comprises:
a plurality of modules;
a plurality of storage elements storing data output from the plurality of modules;
switching means for controlling mutual connection state between the plurality of modules and the plurality of storage elements, and
exchanging of data being performed between the module and the storage element connected by a control of the switching means.

According to the sixth aspect of the present invention, a switching circuit for controlling mutual connection state between a plurality of modules and a plurality of storage elements in a data transfer system including the plurality of modules and the plurality of storage elements storing data output from the plurality of modules, comprises:
a module management table holding information indicative of correspondence of exchanging of data between the modules to perform exchange of the data;
a memory management table holding information indicative of use state of respective of the plurality of storage elements, and
one of the plurality of modules and one of the plurality of storage elements being connected with reference to storage content of both tables.

According to the seventh aspect of the present invention, an adapter in a data transfer system including a plurality of modules and a transmission path for inputting and outputting data to be exchanged between the plurality of modules, the adapter being provided corresponding to each of the plurality of modules and controlling inputting and outputting of data for the transmission path of each corresponding module,
the transmission path being divided into a plurality of fractions of the transmission path for placing each of the fractions between the plurality of modules; and
the adapter comprises:
data holding means for temporarily holding data to be transmitted by a selected fraction of the transmission path among a plurality of fractions of the transmission path and for outputting the held data to other fraction of the transmission path, and the plurality of fractions of the transmission path are connected via the data holding means.

According to the eighth aspect of the present invention, a data transfer method for performing transfer of data in a data transfer system including a plurality of modules, a transmission path inputting and outputting data exchanged between the plurality of modules and a plurality of adapters respectively provided corresponding to the plurality of modules and controlling input and output of data for the transmission path, the transmission path being divided into a plurality of fractions of the transmission path for placing each fraction between the plurality of modules, and the fractions of the transmission path being connected by a plurality of adapters, the data transfer method to be performed each of the adapter comprises:
holding step of temporarily storing data transmitted through a given one of the fraction amount the plurality of fractions of the transmission path; and
outputting step of outputting data held in the holding step to other fraction of the transmission path.

According to the ninth aspect of the present invention, a data transfer method for performing transfer of data in a data transfer system including a plurality of modules, a transmission path inputting and outputting data exchanged between the plurality of modules and a plurality of adapters respectively provided corresponding to the plurality of modules and controlling input and output of data for the transmission path, the transmission path being divided into a plurality of fractions of the transmission path for placing each fraction between the plurality of modules, and the fractions of the transmission path being connected by a plurality of adapters, the data transfer method in the data transfer system comprises:
holding step of temporarily storing data transmitted through a given one of the fraction amount the plurality of fractions of the transmission path; and
outputting step of outputting data held in the holding step to other fraction of the transmission path.

According to the tenth aspect of the present invention, a data transfer method in a data transfer system including a plurality of modules, a plurality of storage elements storing data output from the plurality of modules, and switching means for controlling connection state between the plurality of modules and the plurality of storage elements, the data transfer method comprises:
connection step of connecting two of modules or one of module and one of storage elements among the plurality of modules and a plurality of storage elements; and
step of exchanging of data being performed between the module and the storage element connected.

In short, a plurality of adapters controlling input and output of data for the transmission path by a plurality of modules, are provided corresponding to respective modules. The transmission path is divided into a plurality of fractions of the transmission path per interval between the modules. Respective fractions of the transmission path are connected by a plurality of adapters to establish a single direction transmission passage having the bit width the same as number of bits consisting the transfer data. By this, control of switching and extraction of timing in transfer can be simplified to facilitate speeding up. Thus data transfer system having high transfer efficiency, the integrated circuit having such system and the data transfer method can be realized.

### BRIEF DESCRIPTION OF THE DRAWINGS

The present invention will he understood more fully from the detailed description given herebelow and from the accompanying drawings of the preferred embodiment of the present invention, which, however, should not be taken to be limitative to the invention, but are for explanation and understanding only.

In the drawings:
Fig. 1 is a block diagram showing a construction of an integrated circuit incorporating one embodiment of a data transfer system according to the present invention;
Fig. 2 is a block diagram showing an example of an internal construction of an adapter circuit in Fig. 1;
Fig. 3 is a flowchart of data transfer;
Fig. 4 is a flowchart showing operation of data extraction insertion circuit in Fig. 2;
Fig. 5 is a block diagram showing an example of another internal construction of the adapter circuit of Fig. 1;
Fig. 6 is a block diagram showing an example of a further internal construction of the adapter circuit of Fig. 1;
Fig. 7 is a block diagram showing a construction of the integrated circuit incorporating another embodiment of the data transfer system according to the present invention;
Fig. 8 is a timing chart showing operation of the integrated circuit of Fig. 7;
Fig. 9 is a block diagram showing an example of an internal construction of a transfer control circuit of Fig. 7;
Fig. 10 is a block diagram showing an operation of an insert module determining circuit of Fig. 9;
Fig. 11 is a block diagram showing a construction of the integrated circuit incorporating a further embodiment of the data transfer system according to the present invention;
Fig. 12 is an illustration showing an example of an internal construction of a switching circuit of Fig. 11;
Fig. 13 is an illustration showing a state transition showing operation of the integrated circuit shown in Fig. 11;
Fig. 14 is an illustration showing a state transition showing operation of the integrated circuit shown in Fig. 11;
Fig. 15 is an illustration showing a state transition showing operation of the integrated circuit shown in Fig. 11;
Fig. 16 is an illustration showing a state transition showing operation of the integrated circuit shown in Fig. 11;
Fig. 17 is an illustration showing a state transition showing operation of the integrated circuit shown in Fig. 11;
Fig. 18 is an illustration showing a state transition showing operation of the integrated circuit shown in Fig. 11;
Fig. 19 is an illustration showing a state transition showing operation of the integrated circuit shown in Fig. 11;
Fig. 20 is an illustration showing a state transition showing operation of the integrated circuit shown in Fig. 11;
Fig. 21 is an illustration showing a state transition showing operation of the integrated circuit shown in Fig. 11;
Fig. 22 is an illustration showing a state transition showing operation of another integrated circuit derived by improving the integrated circuit of shown in Fig. 11;
Fig. 23 is an illustration showing a state transition showing operation of a further integrated circuit derived by improving the integrated circuit of shown in Fig. 11; and
Fig. 24 is an illustration showing a state transition showing operation of still further integrated circuit derived by improving the integrated circuit of shown in Fig. 11.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessarily obscure the present invention.

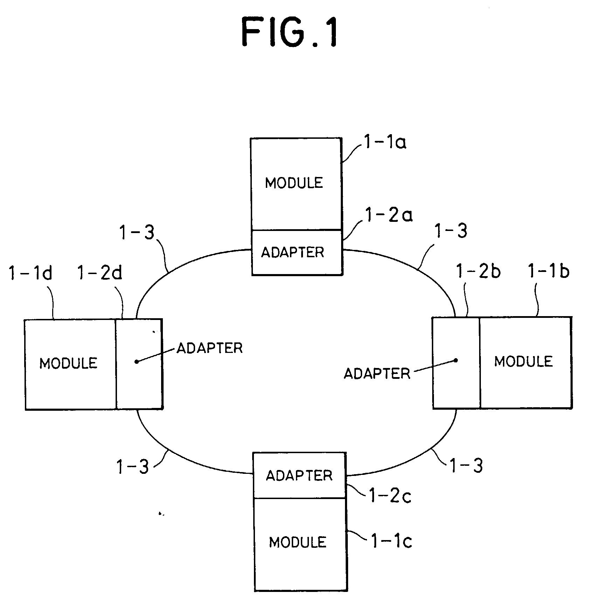

Fig. 1 is a block diagram showing one embodiment of an integrated circuit incorporating a data transfer system according to the present invention. In Fig. 1, the integrated circuit includes modules 1-1a to 1-1d and adapter circuits 1-2a to 1-2d provided corresponding to respective modules 1-1a to 1-1d and connecting respectively corresponding modules to a bus 1-3. Namely, a ring-shaped bus 1-3 is divided by respective modules. The divided fractions of the bus 1-3 are connected by adapters 1-2a to 1-2d. It should be noted that a bus width of the bus 1-3 becomes n bits (n is natural number) which is the same as the bit width of the data to be transferred.

Since the bus 1-3 is connected in ring-shape, data is transmitted from the module 1-1a to the module 1-1b, from the module 1-1b to 1-1c in sequential order, and is returned from the module 1-1d to the module 1-1a. Thus, with the adapter circuits 1-2a to 1-2d, all fractions of the bus 1-3 are connected in ring shape.

By forming the bus into ring shape, data is not required to flow on the bus in both direction as in the prior art and is required to flow in one direction (single direction). Therefore, control for switching the bus becomes quite simple. On the other hand, as will be discussed later, in each adapter circuit 1-2a to 1-2d, a flip-flop (hereinafter referred to as FF), a memory and so forth are provided.

As set forth above, when data is transferred between the FF of one adapter circuit and the FF of another adapter circuit, an absolute delay upon transferring becomes large. However, since a plurality of modules can perform transmission and reception of data simultaneously, a transfer efficiency of the overall system in the integrated circuit can be improved. Accordingly, with the shown integrated circuit, control of switching and extraction of timing for transferring becomes simple. Also, data transfer between respective modules can be speeded up.

It should be noted that respective modules 1-1a to 1-1d of Fig. 1 perform various processes. For example, a process of an audio data, a process of an image data, input/output process outside of the integrated circuit, and so forth may be the processes to be performed by the modules 1-1a to 1-1d.

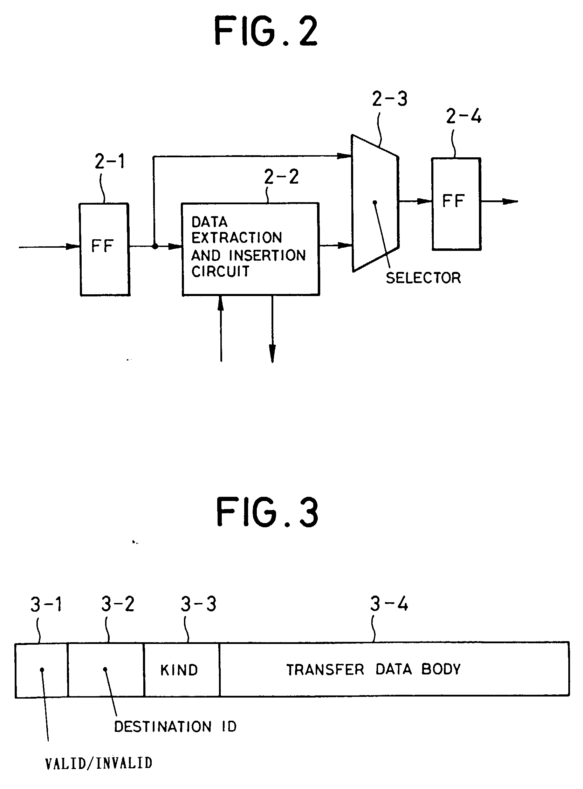

Fig. 2 is a block diagram showing a detailed construction of each adapter circuit of Fig. 1. In Fig. 2, the adapter circuit is constructed with an FF 2-1 temporarily holding data input from an adjacent (one preceding in a sequential order of transfer) adapter circuit, a data extraction and insertion circuit 2-2 judging whether the input data is the data transferred to the module corresponding to own adapter and performing extraction and insertion of the data, a selector 2-3 outputting selectively outputting one of the input data and data output from the data extraction and insertion circuit 2-2 to the bus and an FF 2-4 for re-timing the data to be output to the bus 1-3 as the transmission path with a system clock. It should be noted that the FF 2-1 and the FF 2-4 are known D-type FF.

The data extraction and insertion circuit 2-2 has a function for making judgment whether the input data is the data transferred to the module corresponding to the own adapter (hereinafter referred to as own module), a function for transferring data to the module when the data is for the own module, and a function for inserting data in a time slot which can be transmitted, when the data is transmitted from the module.

With such construction, the data extraction and insertion circuit 2-2 reads a fields of a flag of a transfer data and a destination ID and makes judgment whether the input data is for the own module. If the input data is for the own module, or when the input data is invalid and a data to be output from the own module is present, the selector 2-3 is controlled so as to output the data from the own module instead of outputting the input data.

Fig. 3 is an illustration showing a format of a transfer data to be transferred. In Fig. 3, in an actual transfer data body 3-4, a flag 3-1 indicative of valid/invalid of the data, a destination ID 3-2 identifying a transfer destination module of the data (the module to receive the data), and a kind region 3-3 indicative of kind or so forth of the data. It should be noted that a unit of data transfer to be transmitted at one time is one data of n bit width.

Hereinafter, the operation of the shown integrated circuit will be explained with reference to Figs. 1 to 3.

Data output from the FF 2-4 for re-timing of the adapter circuit 1-2a is taken in the FF 2-1 on the input side of the adapter circuit 1-2b of the next stage at a next transition timing of the clock. The data taken in the FF 2-1 is input to the data extraction and insertion circuit 2-2. In the data extraction and insertion circuit 2-2, judgment is performed whether the data is to be transferred to the own module or not on the basis of the content of the flag 3-1 and the destination ID 3-2.

As a result of judgment, when the data is to be transferred to the own module, the kind of the data is parsed on the basis of the kind region 3-3 to transmit data to the own module. Simultaneously, when data to be transferred from the own module to other module is present, the kind region 3-3 indicative of the kind or so forth of the data and the destination ID 3-2 of the module to receive the data are added to the data to be transferred. Then, the flag 3-1 is set for indicating that the data is valid, to output to the selector 2-3.

On the other hand, even when no data to be transmitted is present, if the transfer data is present in the own module, such data is output to the selector 2-3 as the invalid data by resetting the flag 3-1 thereof.

In the selector 2-3, when the input data is invalid or the data is to be transferred to the own module, the data provided from the data extraction and insertion circuit 2-2 is selected. The data output from the selector 2-3 is subject re-timing by the FF 2-4, and then output to the adapter circuit 1-2c of the next stage. Each adapter circuit 1-2a to 1-2d repeats the foregoing operation.

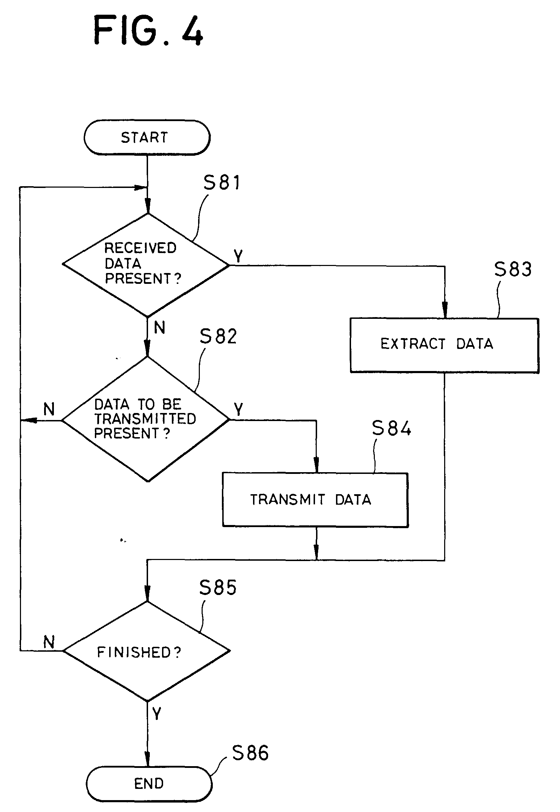

Here, operation of the data extraction and insertion circuit 2-2 in each adapter circuit will be discussed with reference to the flowchart of Fig. 4.

In Fig. 4, the data extraction and insertion circuit makes judgment whether data addressed to own module is received or not (step S81). If no data to addressed to own module is received, judgment is made whether data to be transmitted from own module to other module is present or not (step S81 → S82). Until the data is received or data to be transmitted is present, the foregoing operation is repeated (step S82 → S81 → S82 → ...).

At step S81, when the data address to own module is received, the data is extracted and transferred to the module (step S81 → S83). At step S82, the data to be transmitted from the own module to other module is present, the relevant data is transmitted to other module (step S82 → S84).

After extracting and transmitting these data, judgment is made whether process is completed or not (step S85). If the process is completed, execution of process goes END (step S85 → S86). If the process is not completed, the operation of step S81 and step S82 are repeated, again (step S85 → S81 → S82 →...).

As set forth above, by employing the shown integrated circuit, different from the conventional bus circuit, data will never flow on the bus in both directions and flow in certain single direction to make the control simple. On the other hand, a plurality of modules can transmit and receive data at the same timing. Thus, transfer efficiency can be improved. On the other hand, the bus is re-timed at between each individual module to shorten the wiring length for contributing for speeding up.

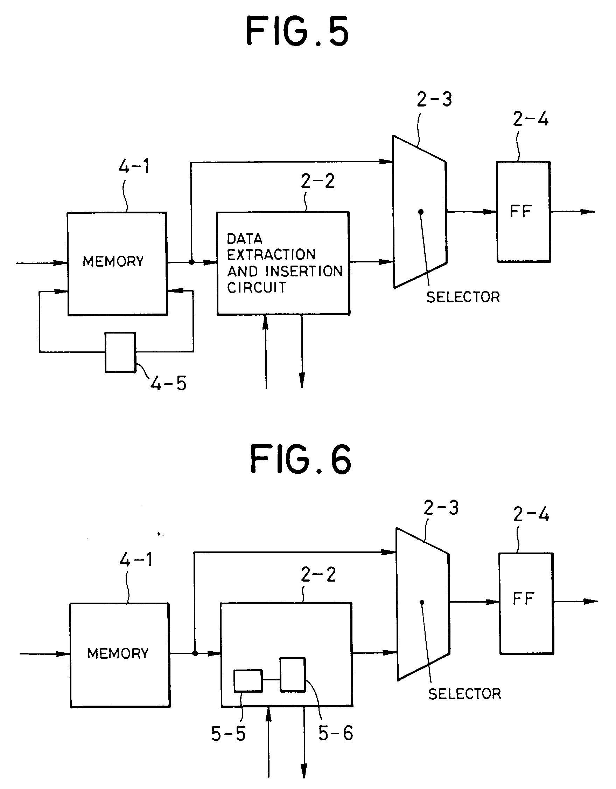

Another embodiment of the adapter circuit in the shown system will be discussed with reference to Fig. 5. In Fig. 5, like components to those in Fig. 2 will be identified by the same reference numerals and detailed description thereof will be neglected in order to avoid redundant discussion for simplification of disclosure for facilitating clear understanding of the present invention. The adapter circuit shown in Fig. 5 employs a memory 4-1 in place of the FF on the input side and features in temporarily holding of data in the memory. On the other hand, a memory access control circuit 4-5 generating a control signal for writing in and reading from the memory 4-1, is provided.

In Fig. 5, the write control signal is generated by the data extraction and insertion circuit 2-2 in the adapter circuit, in which the memory 4-1 to be written the data. It is also possible to generate the write control signal in the adapter circuit of the preceding stage and transmit to the next adapter circuit together with the transfer data.

As set forth above, instead of setting one transfer unit as data to be transmitted per one clock by employing a memory of the semiconductor, data transfer is performed per a unit of aggregated data amount for a several clocks between each module (adapter circuit). Thus, the data extraction and insertion circuit 2-2 is required to perform data transfer for aggregated unit instead of performing judgment process per clock.

Another method for judgement of extraction and insertion of data is to define a correspondence between each time slot and the module which is permitted to extract data from the time slot with providing time slot preliminarily.

With defining such a correspondence, each data extraction and circuit can insert data at the timing when own module is permitted to insert data.

On the other hand, not only insertion of data, but also for extraction, a correspondence between each time slot and the module which is permitted to extract data from the time slot, can be preliminarily defined. In this case, even if the destination ID and the flag indicative of valid/invalid are not added to the transfer data, data transmission and reception can be performed. Upon using these methods, a transfer unit of the data can be either one clock or a plurality of clocks.

In this case, as shown in Fig. 6, the data extraction and insertion circuit 2-2 is constructed with a counter 5-5 performing a counting operation depending upon the system clock, and an extraction and insertion judgment circuit 5-6 performing extraction and insertion of data depending upon the counted value of the counter 5-5. The data extraction and insertion circuit 2-2 thus constructed may determin an extraction and insertion timing of data of the modules connected thereto. Namely, the time slot is recognized by the counted value of the counter 5-5 to perform insertion and extraction of data with respect to a preliminarily defined portion among the recognized time slot. It should be noted that, in Fig. 6, like components to those in Figs. 2 and 5 will be identified by the same reference numerals and detailed description thereof will be neglected in order to avoid redundant discussion for simplification of disclosure for facilitating clear understanding of the present invention.

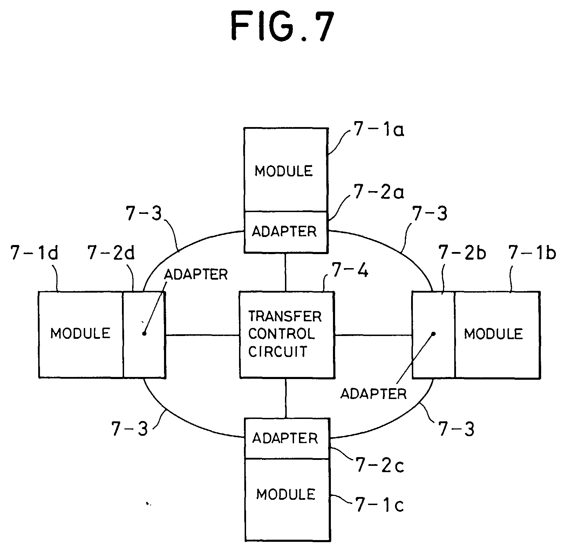

On the other hand, it is also possible to consider that judgment of extraction and insertion of data can be performed by means of a dedicated circuit instead of performing within the adapter circuit. A system construction in such case will be illustrated in Fig. 7.

The integrated circuit shown in Fig. 7 is differentiated from Fig. 1, in that the transfer control circuit 7-4 is provided. The transfer control circuit 7-4 is a circuit for generating a control signal indicative whether extraction or insertion of data can be performed or not for each adapter circuit 7-2a to 7-2d.

In the control of the transfer control circuit 7-4, the following method will be considered. Namely, there can be a method for receiving a transfer demand from each adapter circuit for performing transfer control depending thereon or a method for preliminarily determining the recipient using a table or so forth and notifying the same. By concentrically performing control of the overall data transfer system in the integrated circuit by the transfer control circuit 7-4, local concentration of the senders and recipients can be prevented to perform more fair data transfer can be performed.

In this case, it is also possible to set preference in transfer to give permission for the transfer demand according to the preference. The preference may be preliminarily set fixedly for each module or be designated by the module itself upon issuing each transfer demand.

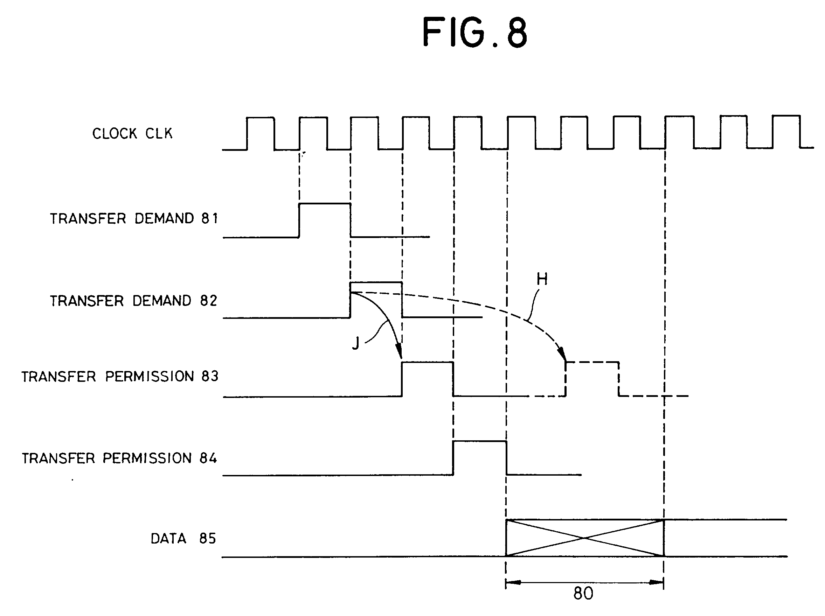

Fig. 8 is a timing chart showing an operation for transfer demand between the transfer control circuit 7-4 and each adapter circuit 1-2a to 1-2d. In Fig. 8, there are illustrated a system clock CLK, a transfer demand 81 to be output by the module, a transfer demand 82 to be received by the transfer control circuit 7-4, a transfer permission 83 output by the transfer control circuit 7-4, a transfer permission 84 received by the module and a data 85 output to the bus 1-3 as the transmission path.

In Fig. 8, when the transfer demand 81 is output from the module in synchronism with the system clock CLK, the transfer demand 81 is input to the transfer control circuit 7-4 as the transfer demand 82 with a given period of delay. In the transfer control circuit 7-4, the transfer permission 82 is output according to the predetermined preference. In this case, in principle, as shown by a solid line J, the transfer permission 83 is output instantly. However, it is possible that the transfer permission 83 cannot be transmitted instantly and is output with a delay of several clock as illustrated by the broken line H. The reason is that, in certain traffic condition, the permission cannot be issued instantly.

The transfer permission 83 output from the transfer control circuit 7-4 is input to the module as the transfer permission 84 with a given period of delay. The module receiving the transfer permission 84 outputs the data 85 at certain timing within a period 80. Namely, it is possible to wait for several clock to actually feed the data. The reason is that data to be inserted or can be overwritten to the bus has to be waited.

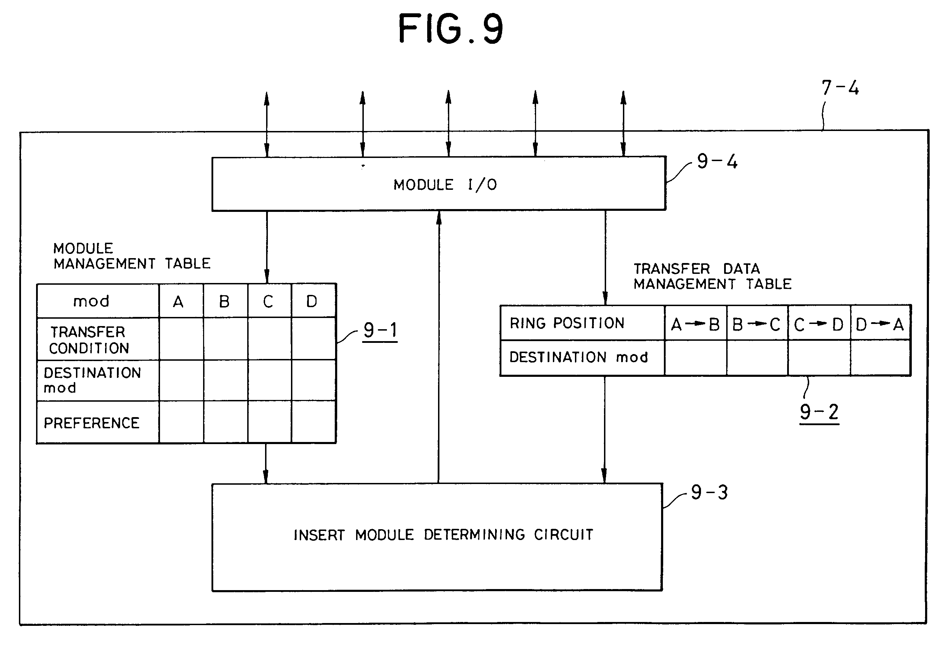

Fig. 9 is a block diagram showing an example of construction of the transfer control circuit 7-4 of Fig. 7. In Fig. 9, the transfer control circuit 7-4 is constructed with a module management table 9-1 for managing transfer condition of the transfer data from each module and destination module of the transfer data and preference of the transfer demand, a transfer data management table 9-2 for performing management of the transfer data, an insert module determining circuit 9-3 performing intervention of the transfer demand for the bus and permitting insertion of the transfer data for each module and a module I/O interface 9-4 forming an input and output interface of the control signal with each module.

The item of the module management table 9-1 is "transfer condition" indicative whether each module (mod) in the integrated circuit is transferring the transfer data or not, "destination mod" indicative of the module as the destination of the transfer data, and "preference" indicative of the preference of the transfer demand.

The transfer management table 9-2 has an item "destination mod" indicative that destination modules of the currently flowing data and the current positions of the currently flowing data. The table 9-2 is constructed with a shift register, and similarly to flow of data in the ring-shaped bus, the content of the item is shifted from left to right in Fig. 9 per each clock. With making reference to the content of the table 9-2, it becomes possible to know the destination modules of the currently flowing data and the current position of the currently flowing data . Accordingly, when data in response to the transfer demand having high preference is flowing, it becomes possible to know how many clocks to be waited until the currently flowing data reaches the destination module and the data is extinguished from the bus.

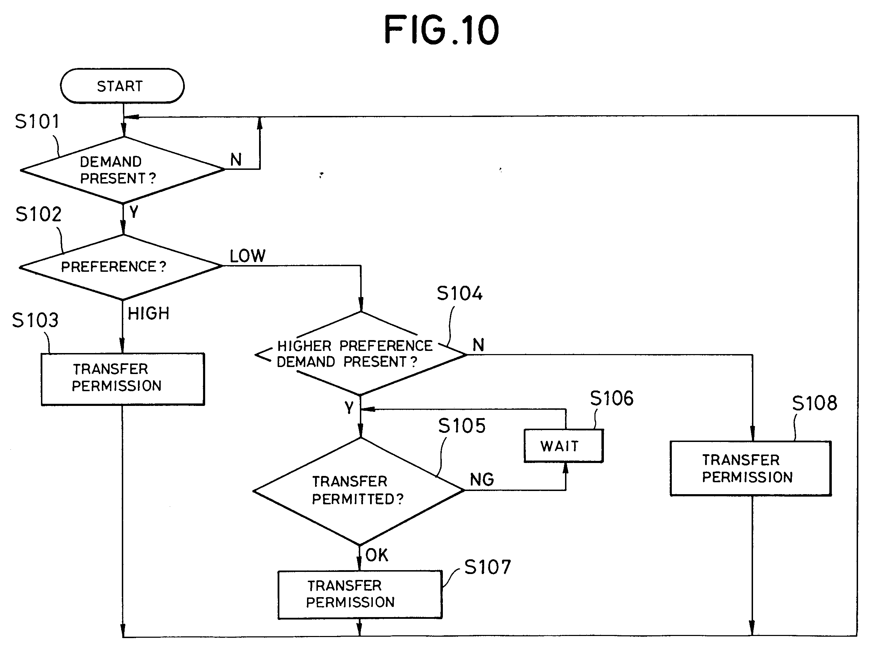

Fig. 10 is a flowchart showing operation of the insert module determining circuit in the transfer control circuit in Fig. 7. In Fig. 7, at first, judgment is made whether the transfer demand from the adapter circuit corresponding to the module is present. If the transfer demand is not present, a the transfer demand is waited (step S101). On the other hand, when the transfer demand is present, the preference of the transfer demand is checked (step S102). If the preference is high, the transfer permission is output (step S103). The module receiving the transfer permission, outputs data to the bus.

On the other hand, when the preference is low, check is performed whether other transfer demand having higher preference is present or not (step S102 → S104). If the transfer demand having higher preference is not present, the transfer permission is output (step S104 → S108). The module receiving the transfer permission, outputs data to the bus.

If the transfer demand having high preference is present, the foregoing transfer data management table is made reference to, for making judgement whether transfer is to be permitted or not on the basis of the inserting position and the extracting position of data of each module (step S105). Then, with making reference to the transfer data management table, it becomes possible to know how many clocks to be waited until the currently flowing data reaches the destination module and the data is extinguished from the bus. Therefore, transfer of the data is withheld in the waiting state (WAIT) for a period corresponding to the number of clocks (step S105 → S106 ...).

When transfer is to be permitted, the transfer permission is output (step S105 → S107). The module receiving the transfer permission, outputs data to the bus. Subsequently, the foregoing operation is repeated to perform data transfer between respective modules.

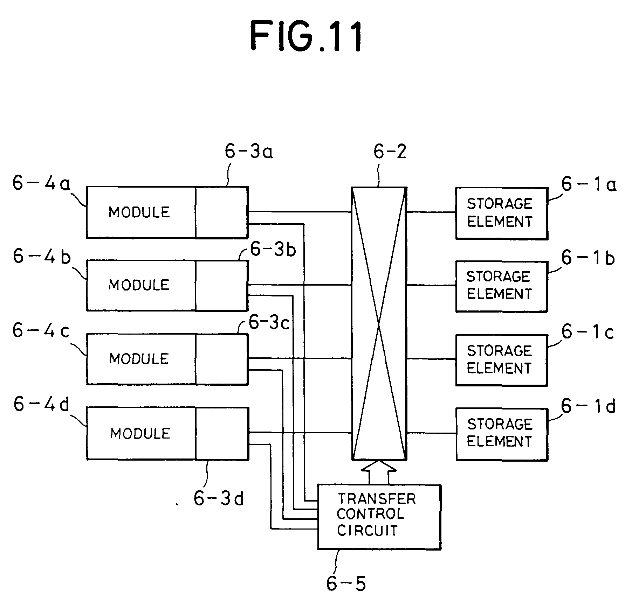

On the other hand, as a method for performing actual data transfer, there is a transfer method to effectively use a plurality of storage elements instead of connecting respective adapter circuits in ring shape. This transfer method will be discussed with reference to Fig. 11. In Fig. 11, like components to those in the former drawings will be identified by the same reference numerals and detailed description thereof will be neglected in order to avoid redundant discussion for simplification of disclosure for facilitating clear understanding of the present invention.

In Fig. 11, the shown embodiment of the data transfer system in the integrated circuit is constructed with modules 6-4a to 6-4d, adapter circuits 6-3a to 6-3d provided corresponding to respective modules 6-4a to 6-4d and performing transmission and reception process of data and exchanging of information with a control circuit, storage elements 6-1a to 6-1d constructed with register, memory or the like, switching circuit 6-2 determining connecting condition between each adapter and each storage element, and a transfer control circuit 6-5 exchanging information with each adapter circuit, generating a switching information for controlling connecting condition between each storage element and each adapter circuit, and performing switching control of the switching circuit 6-2. In the shown embodiment, the storage elements in number corresponding to number of the modules and the adapter circuits are provided. However, number of the storage elements is not necessarily the same as number of the modules and the adapter circuits. If greater number of storage elements are provided, a probability of presence of the storage element in vacant condition becomes high to make data transmission efficiency high.

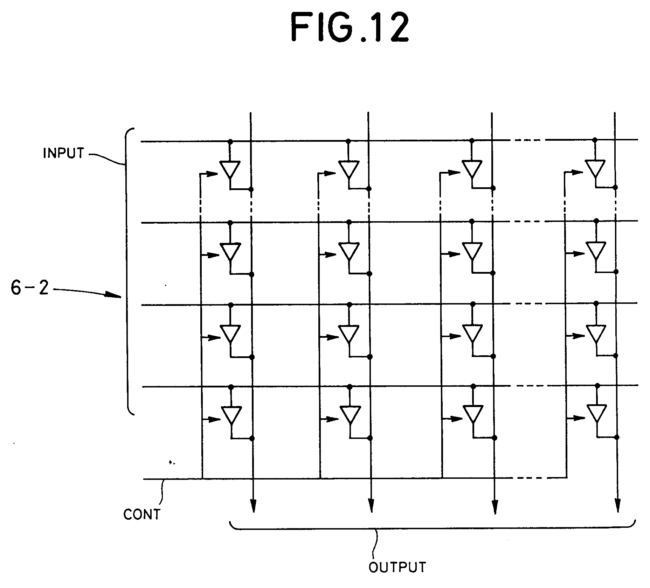

Here, an example of the internal construction of the switching circuit 6-2 will be illustrated in Fig. 12. As shown in Fig. 12, the switching circuit 6-2 is applied data output from respective modules 6-4a to 6-4d and data output from respective storage elements 6-1a to 6-1d on signal line group on the input side (Input) and effects switching control of the applied data to transmit data for respective modules 6-4a to 6-4d and respective storage elements 6-1a to 6-1d to the signal line group. In order to control electrical connection between the input side signal line group and the output side signal line group, three-state buffers are provided at respective intersections of both signal line groups. On each control terminal of the three-state buffer provided at each intersection, a control signal Cont corresponding to the switching information from the transfer control circuit 6-5 is input.

Returning to Fig.11, operation of the shown embodiment of the integrated circuit will be discussed. When the module 6-4a transfers the data to the module 6-4c, the adapter 6-3a sends a notice to the transfer control circuit 6-5 that data is to be transferred to the adapter circuit 6-3C. Then, the transfer control circuit 6-5 controls the switching circuit 6-2 to control connection so that connection between the storage element which is currently used among the storage elements 6-1a to 6-1d (the storage element not accumulating the effective data: here assumed as 6-1d), and the adapter circuit 6-3a, is established.

The transfer control circuit 6-5 notifies ready condition to the adapter circuit 6-3a. The adapter circuit 6-3a transmits data. The transmitted data is stored in the storage element 6-1d. When the data is stored, the transfer control circuit 6-5 notifies presence of the data be transmitted, to the adapter circuit 6-3C. At the same time, the transfer control circuit 6-5 controls the switching circuit 6-2 for establishing connection between the storage element 6-1d and the adapter circuit 6-3C. Upon reception of notice, the adapter circuit 6-3C reads out the data and feeds the read out data to the module 6-4C. Demand of transfer, notice or actual transfer as set forth above may permit a plurality of modules to perform data transmission and reception at the same time.

Here, switching control of the switching circuit 6-2 may performed at a certain predetermined period, for example per each clock or per a plurality of clocks, or, in the alternative, may perform depending upon state or demand of each adapter circuit. On the other hand, since number of connections between respective storage elements, the respective modules and adapter circuit can be modified arbitrarily, mode of connection can be freely varied depending upon required performance, such as to connect greater number of modules or to provide greater number of storage elements for reducing a waiting period and so forth upon transfer of the data.

As set forth above, by employing the shown system, actual data transfer becomes only twice those from the sender to the storage element and from the storage element to the recipient. Therefore, a transfer delay can be reduced than that in the case of connection in ring shape. Also, a power to he consumed during transfer can be reduced.

On the other hand, in place of using a plurality of storage elements and the switching circuit as shown, a multi-port memory having a plurality of input/output ports may be used.

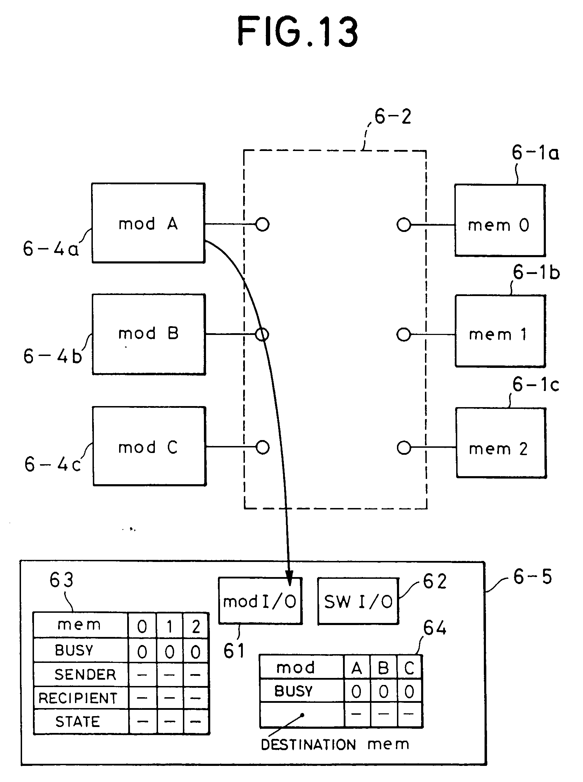

Furthermore, with reference to state transition charts shown in Figs. 13 to 21, operation of the integrated circuit shown in Fig. 11 will be discussed. In Figs. 13 to 21, like components to those in the preceding drawings will be identified by the same reference numerals and detailed description thereof will be neglected in order to avoid redundant discussion for simplification of disclosure for facilitating clear understanding of the present invention.

In Figs. 13 to 21, for convenience of disclosure, within the integrated circuit, respective three modules and storage elements are provided. Namely, three modules 6-4a (mod A), module 6-4b (mod B), module 6-4c (mod C) and three storage elements 6-1a (mem 0), storage element 6-1b (mem 1) and storage element 6-1c (mem 2) are connected across the switching circuit 6-2. Control of the connection state is performed by the transfer control circuit 6-5.

Hereinafter, discussion will be given for the case where the module 6-4a transfers data to the module 6-4c. At the same time, the module 6-4b transfers data to the module 6-4a.

As shown in Fig. 13, within the transfer control circuit 6-5, a module interface (mod I/O) 61 for exchanging the transfer demand and transfer permission with respective modules, and a switching interface (SW I/O) 62 for outputting a switching control signal to the switching circuit are provided. On the other hand, within the transfer control circuit 6-5, a memory table 63 having respective items of information indicative of use state (busy/vacant) of each storage element, information indicative of the sender module and recipient module with respect to data stored in the storage element and state information indicative of ON/OFF state of connection by the switching circuit, and a module table 64 having both items of information indicative of operation state (busy/stand-by) of respective modules and information indicative of the storage element in the destination.

In Fig. 13, the memory table 63 indicates "0" representing vacant states of all storage elements and the module table 64 indicates "0" representing waiting state of all modules. In this condition, the module 6-4a requires data transmission for the transfer control circuit 6-5. The demand is input to the module interface 61 in the transfer control circuit 6-5.

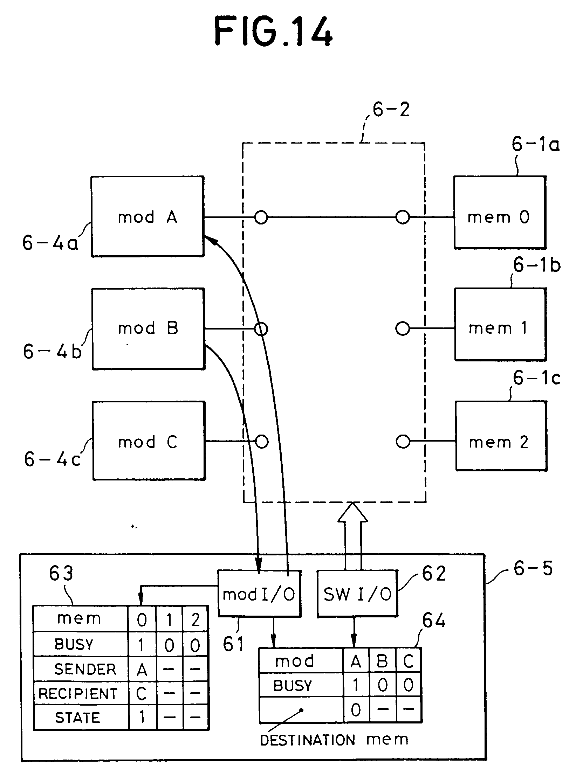

In Fig. 14, the module 6-4b requires data transmission for the transfer control circuit. The demand is input to the module interface 61 in the transfer control circuit 6-5. On the other hand, the transfer control circuit 6-5 controls the switching circuit 6-2 to establish connection between the module 6-4a and the storage element 6-1a. By this, the memory table 63 varies the state of the storage element 6-1a (mem 0) into busy state, the sender is "A" and the recipient is "C". The connection state by the switching circuit becomes "1" indicative of writing state for the storage element 6-1a.

Furthermore, the transfer control circuit 6-5 notifies transfer permission to the module 6-4a. By this, in the module table 64, the module 6-4a (mod A) is busy state and the storage element of the destination becomes "mem 0".

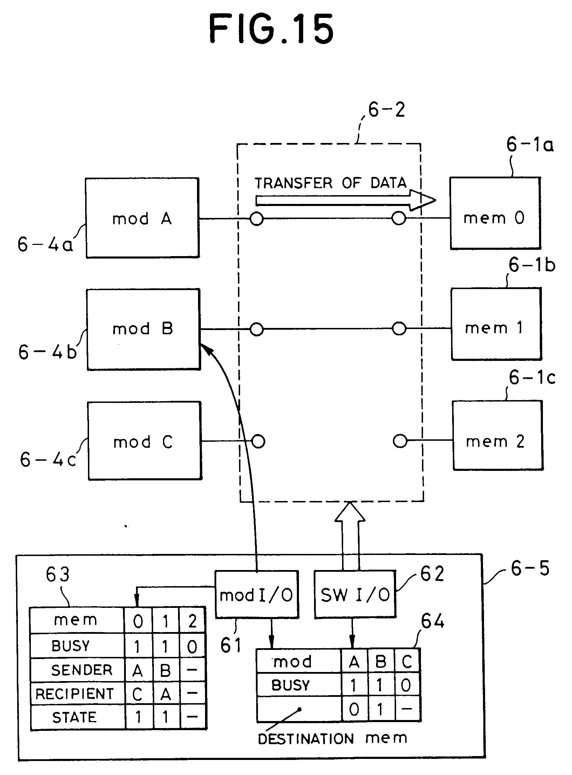

In Fig. 15, the module 6-4a starts transfer of data to the storage element 6-1a. On the other hand, the transfer control circuit 6-5 controls the switching circuit 6-2 for establishing connection between the module 6-4b and the storage element 6-1b. By this, the memory table 63 varies the storage element 6-1b (mem1)to be busy state ("1"). Then, the sender is "B" and the recipient is "A". The connection state of the switching circuit becomes "1" to indicate writing state for the storage element 6-1b.

Furthermore, the transfer control circuit 6-5 notifies the transfer permission to the module 6-4b. By this, in the module table 64, when the module 6-4b (mod B) becomes busy state, and the storage element of the destination becomes "mem 1".

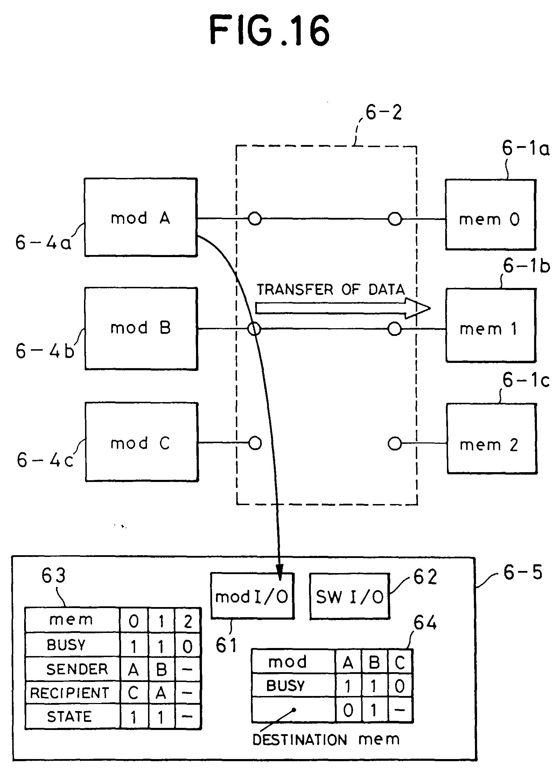

In Fig. 16, the module 6-4a notifies that the data transfer to the storage element 6-1a is completed to the transfer control circuit 6-5. On the other hand, the module 6-4b starts transfer of data for the storage element 6-1b. It should be noted that the contents of the memory module 63 and the module table 64 are not varied.

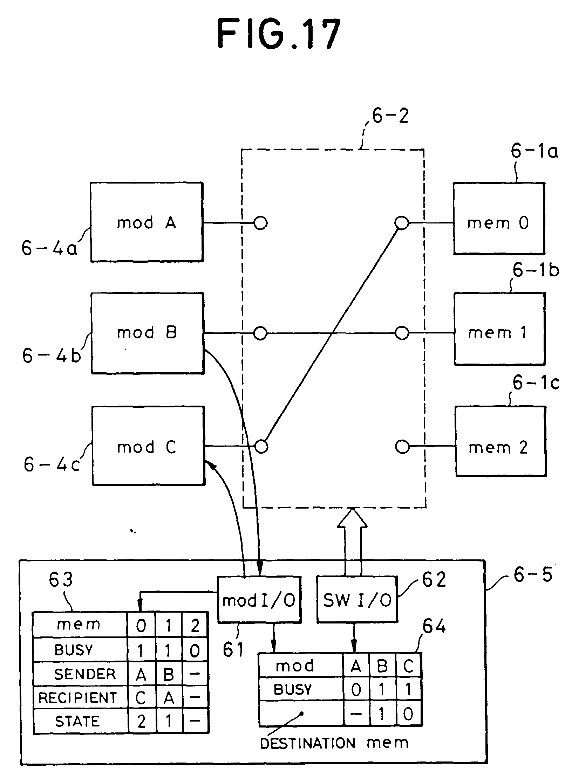

In Fig. 17, the module 6-4b notifies that data transfer to the storage element 6-1b is completed to the transfer control circuit 6-5. On the other hand, the transfer control circuit 6-5 controls the switching circuit 6-2 to establish connection between the module 6-4c and the storage element 6-1a and the transfer permission (read command) is notified to the module 6-4c.

By this, the memory table 63 is varied the connection state by the switching circuit from connecting state to "2" to indicate reading state for the storage element 6-1a. On the other hand, in the module table 64, the module 6-4a (mod A)becomes waiting state ("0"), the module 6-4b (modB) becomes busy state ("1") , the storage element of the destination is "mem 1", and the module 6-4c (mod C) becomes busy ("1").

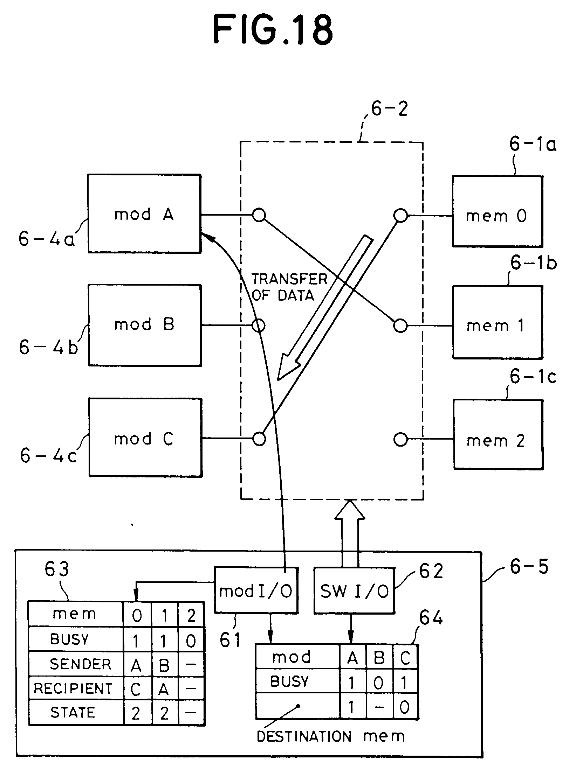

In Fig. 18, the module 6-4c reads out data from the storage element 6-1a. On the other hand, the transfer control circuit 6-5 controls the switching circuit 6-2 to establish connection between the module 6-4a and the storage element 6-1b to send the transfer permission (read command) to the module 6-4a.

By this, the memory table 63 varies the connection state by the switching circuit to "2" indicative of read condition for the storage element 6-1b. On the other hand, in the module table 64, the module 6-4a (mod A) is in busy state ("1"), the storage element of the destination is "mem 1", the module 6-4b (mod B) is in waiting state ("0"), the module 6-4c (mod C) is in busy state ("1"), and the storage element of the destination is "mem 0".

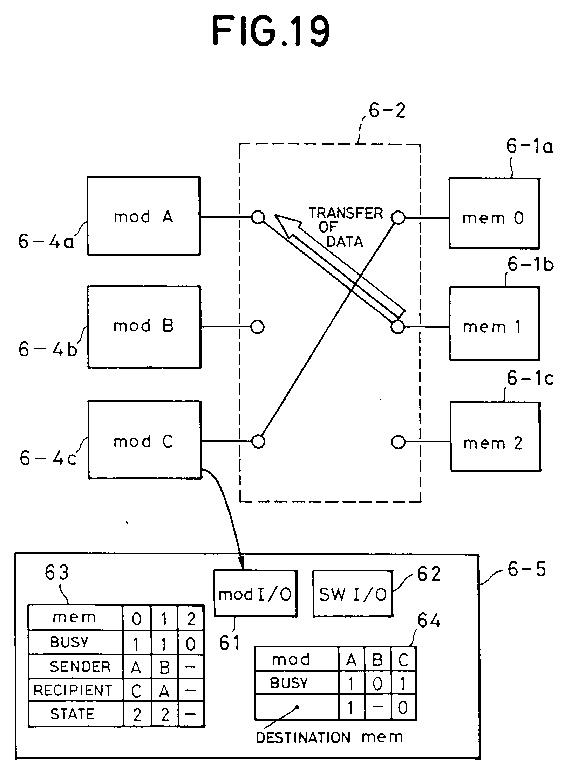

In Fig. 19, the module 6-4a reads out data from the storage element 6-1b. On the other hand, the module 6-4c notifies completion of read of data from the storage element 6-1a by the transfer control circuit 6-5. It should be noted that the contents of the memory table 63 and the module table 64 are not varied.

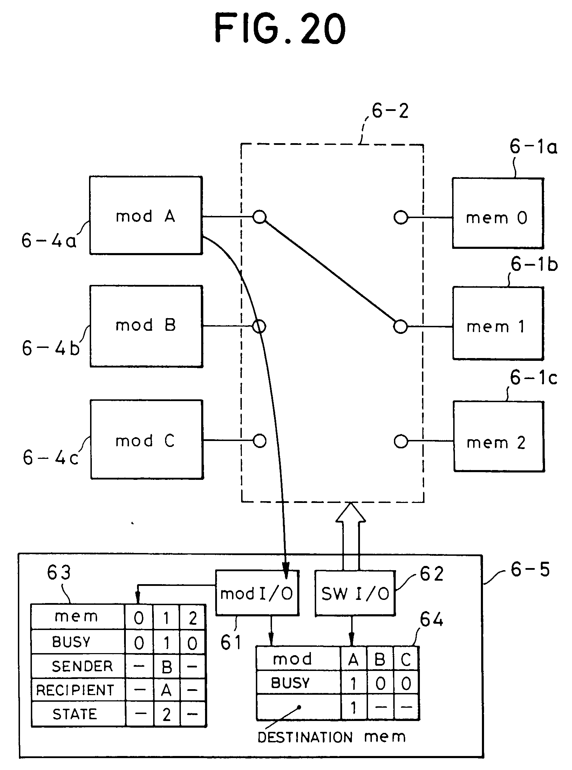

In Fig. 20, the module 6-4a notifies completion of read of data from the storage element 6-1b by the transfer control circuit 6-5. On the other hand, the transfer control circuit 6-5 releases connection between the module 6-4c and the storage element 6-1a to place the storage element 6-1a in write enabled state.

By this, in the memory table 63, the storage element 6-1a is varied in the vacant state. On the other hand, in the module table, the module 6-4a (mod A) becomes busy state ("1"), the storage element of the destination is "mem 1", the module 6-4b (mod B) and the module 6-4c (mod C) are in waiting state ("0").

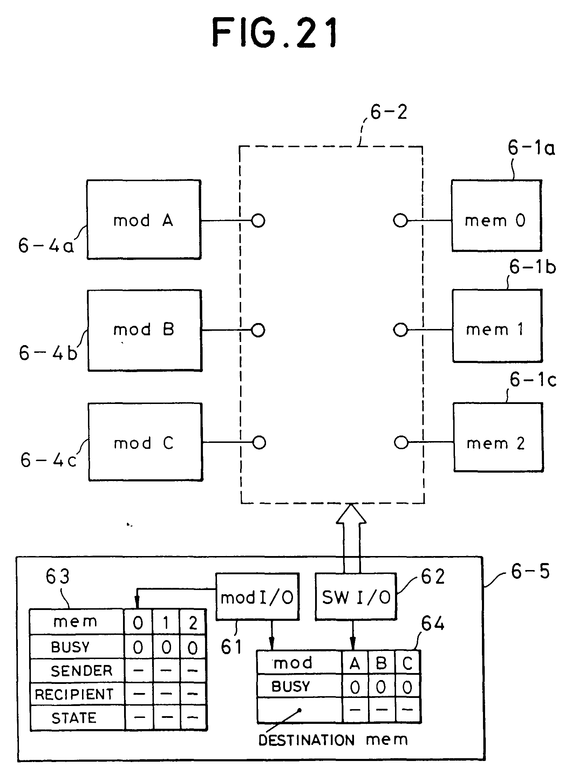

In Fig. 21, the transfer control circuit 6-5 releases connection between the module 6-4a and the storage element 6-1b to place the storage element 6-1b in write enabled state. It should be noted that, in the memory table 63, all of the storage elements becomes vacant condition. In the module table 64, all of the modules becomes waiting or stand-by state ("0").

As set forth above, by transferring data by controlling a plurality of modules and a plurality of storage elements, a plurality of modules can perform transmission and reception of data simultaneously. On the other hand, even if the recipient of data is in busy state, data can be transmitted if any one of the storage element is in vacant state. In this case, by arbitrarily modifying number of the storage elements, data transmission efficiency may also be varied. Furthermore, in comparison with the case where the ring shaped transmission path is employed, transfer delay can be made smaller.

Here, in the integrated circuit of Fig. 11, the data is inherently stored in the storage element temporarily. Namely, data transfer is performed through the storage element. Therefore, when all of the storage elements are in busy state, transmission of data from the module is stopped.

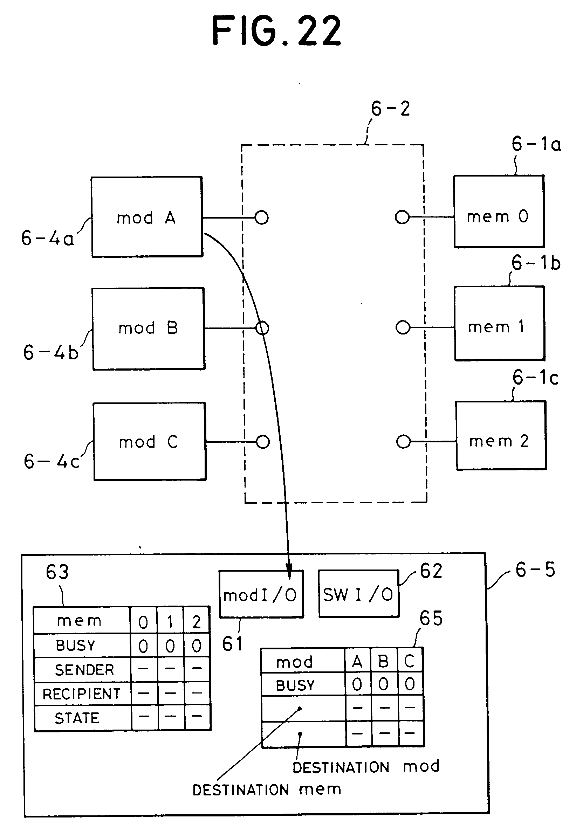

Therefore, for solution of this problem, it is possible to directly exchange data between a plurality of modules without storing data in the storage element. In this case, the item of the destination module is added to the module table within the transfer control circuit 6-5 to manage data transfer between the module in addition to data transfer between the module and the storage element. A construction and operation in the case where data is directly exchanged between a plurality of modules will be discussed with reference to Figs. 22 to 24. In Figs. 22 to 24, like components to those in other preceding drawings will be identified by the same reference numerals and detailed description thereof will be neglected in order to avoid redundant discussion for simplification of disclosure for facilitating clear understanding of the present invention.

As shown in Fig. 22, different from the case of Figs. 13 to 21, an item of the destination module (destination mod) is provided in the module table 65. Since this item is added for the table, direct data transfer from certain module to other module can be managed.

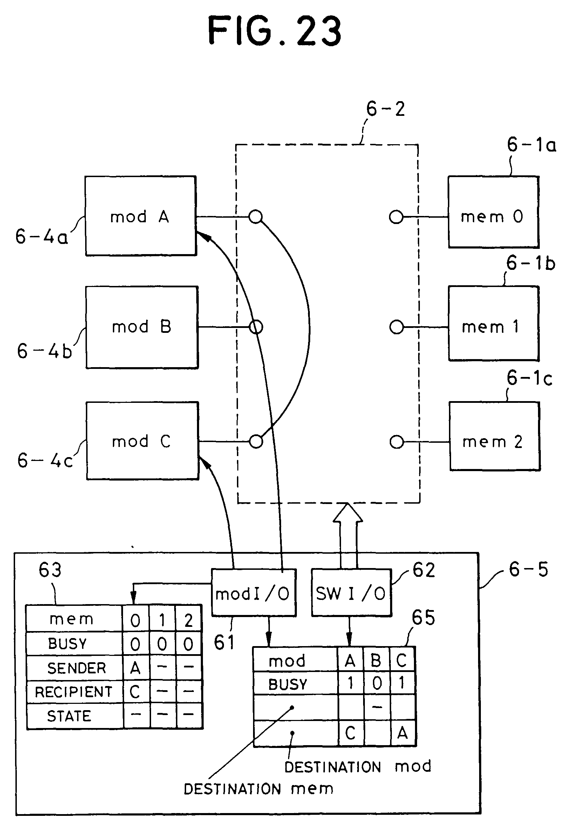

In Fig. 22, the module 6-4a demands data transmission to the transfer control circuit 6-5. Then, in Fig. 23, the transfer control circuit 6-5 controls the switching circuit 6-2 to establish connection between the module 6-4a and the module 6-4c to notice transfer permission to the module 6-4a and the module 6-4c.

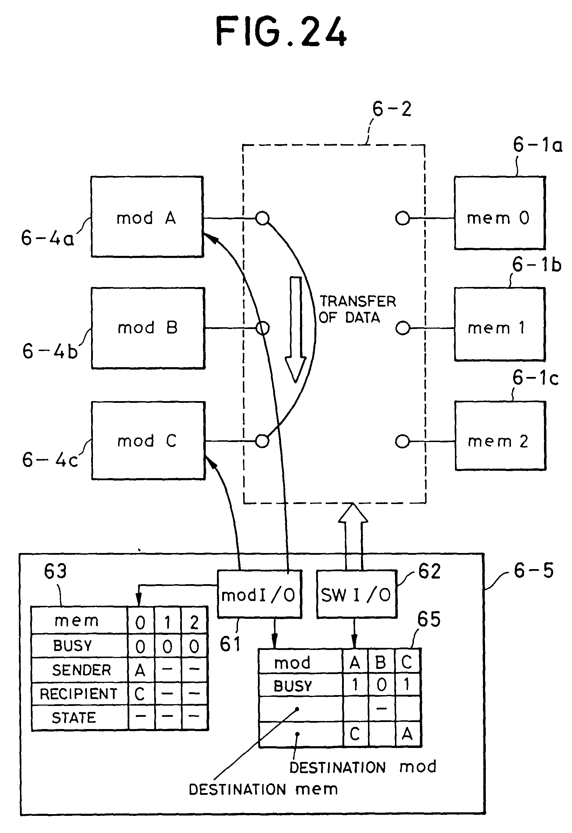

By this, in the memory table 63, the item of mem 0 becomes a content that the sender is the module 6-4a ("A") and the recipient is module 6-4c ("C"). On the other hand, in the module table 65, the module 6-4a and the module 6-4c become "1" indicative of the busy state, and the destination module of the module 6-4a is the module 6-4c ("C"), and the destination module of the module 6-4c is the module 6-4a ("A"). After this condition, as shown in Fig. 24, the module 6-4a directly transfers data to the module 6-4c.

By effecting control as set forth above, different from the case of Figs. 13 to 21, data transfer is not performed via the storage element. Unless both of the sender and the recipient modules are busy state, delay period in transfer becomes quite small.

It should be noted that, as shown in Figs. 11 to 24 set forth above, when data is transferred using the storage element, in some operating condition of the module and vacant condition of the storage element, order of transfer of data becomes random to possibly differentiate order from that should be. In order to prevent this, information indicative of the sequential order of transfer is added to data or information indicative of the transfer time is held by increasing item of the table, the order of transfer that should be can be recognized.

Here, in the conventional ring network (token network) a packet (data) transmission on the network is permitted only for one module among a plurality of modules. In contrast to this, in the shown integrated circuit, the transmission path is divided into a plurality of fractions between a plurality of modules, and respective divided fractions of the transmission path are connected to a plurality of adapters. Therefore, by the shown integrated circuit, a plurality of modules can perform insertion and extraction of data simultaneously. Therefore, switching control or timing extraction of transfer can be simplified to facilitate speeding up to improve transfer efficiency.

It should be noted that while the integrated circuit having the data transfer system, has been discussed, the present invention is applicable for the data transfer system or the data transfer method apart from the integrated circuit.

As set forth above, the present invention employs a construction to employ a single direction transmission path having the same bit width as number of bits consisting the transfer data and a plurality of nodes exchange transfer data with the transfer path in order to perform transfer of the transfer data between a plurality of nodes. By this, the data transfer system of high transfer efficiency, in which switching control and timing extraction of transfer can be simplified to facilitate speeding up.

## Claims

1. An integrated circuit having a data transfer system comprising:
a plurality of modules;
a transmission path inputting and outputting data to be exchanged between a plurality of modules;
a plurality of adapters respectively corresponding to a plurality of modules and controlling input and output of data for said transmission path, and
said transmission path being divided into a plurality of fractions of the transmission path between said plurality of modules, each of fractions of the transmission path being connected by a plurality of adapters.

2. An integrated circuit as set forth in claim 1, wherein said plurality of adapters include data holding means for temporarily holding data to be transmitted by a selected fraction of the transmission path among a plurality of fractions of the transmission path and for outputting the held data to other fraction of the transmission path, and said plurality of fractions of the transmission path are connected via said data holding means for forming a ring shaped transmission path.

3. An integrated circuit as set forth in claim 1, wherein each of said fraction of the transmission path establishes a single direction transmission path having the same bit width as number of bits consisting said data.

4. An integrated circuit as set forth in claim 1, wherein said plurality of adapters further include selecting means for controlling so that one of data held in said data holding means and data output by the module corresponding to own adapter is selectively output to said other fraction of the transmission path.

5. An integrated circuit as set forth in claim 4, wherein said data includes a destination information indicative of module to receive said data and said selecting means performs output control to said other fraction of the transmission path depending upon said destination information.

6. An integrated circuit as set forth in claim 1, which further includes transfer control means for performing intervention of a transfer demand with respect to said data output from respective of said plurality of modules.

7. An integrated circuit as set forth in claim 6, wherein said transfer control means performs intervention of the transfer demand depending upon a preliminarily applied preference for respective of said plurality of modules.

8. An integrated circuit as set forth in claim 6, wherein said transfer control means performs intervention of the transfer demand depending upon a preference given for said transfer demand per se output from respective of said plurality of modules.

9. A data transfer system comprising:
a plurality of modules;
a transmission path inputting and outputting data to be exchanged between a plurality of modules;
a plurality of adapters respectively corresponding to a plurality of modules and controlling input and output of data for said transmission path, and
said transmission path being divided into a plurality of fractions of the transmission path between said plurality of modules, each of fractions of the transmission path being connected by a plurality of adapters.

10. A data transfer system as set forth in claim 9, wherein said plurality of adapters include data holding means for temporarily holding data to be transmitted by a selected fraction of the transmission path among a plurality of fractions of the transmission path and for outputting the held data to other fraction of the transmission path, and said plurality of fractions of the transmission path are connected via said data holding means for forming a ring shaped transmission path.

11. A data transfer system as set forth in claim 9, which further includes transfer control means for performing intervention of a transfer demand with respect to said data output from respective of said plurality of modules.

12. A data transfer system as set forth in claim 11, wherein said transfer control means performs intervention of the transfer demand depending upon a preliminarily applied preference for respective of said plurality of modules.

13. A data transfer system as set forth in claim 11, wherein said transfer control means performs intervention of the transfer demand depending upon a preference given for said transfer demand per se output from respective of said plurality of modules.

14. A data transfer system comprising:
a plurality of modules;
a plurality of storage elements storing data output from said plurality of modules;
switching means for controlling connection state between said plurality of modules and said plurality of storage elements, and
exchanging of data being performed between the module and the storage element connected by a control of said switching means.

15. A data transfer system as set forth in claim 14, wherein said switching means connects one of said plurality of modules transmitting data and one of said plurality of storage elements storing no effective data.

16. A data transfer system as set forth in claim 14, wherein said switching means controls connecting condition depending upon the demand from the module outputting said data.

17. A data transfer system as set forth in claim 14, wherein said switching means includes a module management table holding information indicative of correspondence in exchanging data between modules to exchange said data and a memory management table holding information indicative of use condition of respective of said plurality of storage elements.

18. A switching circuit for controlling connection state between said plurality of modules and said plurality of storage elements in a data transfer system including a plurality of modules and a plurality of storage elements storing data output from said plurality of modules, comprising:
a module management table holding information indicative of correspondence of exchanging of data between said modules to perform exchange of said data;
a memory management table holding information indicative of use state of respective of said plurality of storage elements, and
one of said plurality of modules and one of said plurality of storage elements being connected with reference to storage content of both tables.

19. A switching circuit as set forth in claim 18, which connects one of said plurality of modules transmitting data and one of said plurality of storage elements not storing effective data.

20. A switching circuit as set forth in claim 18, wherein said connecting condition is controlled depending upon a demand from a module outputting said data.

21. A data transfer system comprising:
a plurality of modules;
a plurality of storage elements storing data output from said plurality of modules;
switching means for controlling mutual connection state between said plurality of modules and said plurality of storage elements, and
exchanging of data being performed between the module and the storage element connected by a control of said switching means.

22. A data transfer system as set forth in claim 21, wherein said switching means connects one of said plurality of modules transmitting data and a module to receive said data.

23. A data transfer system as set forth in claim 21, wherein said switching means connects one of said plurality of modules transmitting data and one of said plurality of storage elements storing no effective data.

24. A data transfer system as set forth in claim 21, wherein said switching means controls connecting condition depending upon the demand from the module outputting said data.

25. A data transfer system as set forth in claim 21, wherein said switching means includes a module management table holding information indicative of correspondence in exchanging data between modules to exchange said data and a memory management table holding information indicative of use condition of respective of said plurality of storage elements.

26. A switching circuit for controlling mutual connection state between a plurality of modules and a plurality of storage elements in a data transfer system including said plurality of modules and said plurality of storage elements storing data output from said plurality of modules, comprising:
a module management table holding information indicative of correspondence of exchanging of data between said modules to perform exchange of said data;
a memory management table holding information indicative of use state of respective of said plurality of storage elements, and
one of said plurality of modules and one of said plurality of storage elements being connected with reference to storage content of both tables.

27. A data transfer system as set forth in claim 26, wherein said switching means connects one of said plurality of modules transmitting data and a module to receive said data.

28. A switching circuit as set forth in claim 26, which connects one of said plurality of modules transmitting data and one of said plurality of storage elements not storing effective data.

29. A switching circuit as set forth in claim 26, wherein said connecting condition is controlled depending upon a demand from a module outputting said data.

30. An adapter in a data transfer system including a plurality of modules and a transmission path for inputting and outputting data to be exchanged between said plurality of modules, said adapter being provided corresponding to each of said plurality of modules and controlling inputting and outputting of data for said transmission path of each corresponding module,
said transmission path being divided into a plurality of fractions of the transmission path for placing each of said fractions between said plurality of modules; and
said adapter comprising:
data holding means for temporarily holding data to be transmitted by a selected fraction of the transmission path among a plurality of fractions of the transmission path and for outputting the held data to other fraction of the transmission path, and said plurality of fractions of the transmission path are connected via said data holding means.

31. An adapter as set forth in claim 30, wherein said plurality of fractions of the transmission path is connected via said data holding means for forming a ring shaped transmission path.

32. An adapter as set forth in claim 30, wherein each of said fraction of the transmission path establishes a single direction transmission path having the same bit width as number of bits consisting said data.

33. An adapter as set forth in claim 30, wherein said plurality of adapters further include selecting means for controlling so that one of data held in said data holding means and data output by the module corresponding to own adapter is selectively output to said other fraction of the transmission path.

34. An adapter as set forth in claim 30, wherein said data includes a destination information indicative of module to receive said data and said selecting means performs output control to said other fraction of the transmission path depending upon said destination information.

35. A data transfer method for performing transfer of data in a data transfer system including a plurality of modules, a transmission path inputting and outputting data exchanged between said plurality of modules and a plurality of adapters respectively provided corresponding to said plurality of modules and controlling input and output of data for said transmission path, said transmission path being divided into a plurality of fractions of the transmission path for placing each fraction between said plurality of modules, and said fractions of said transmission path being connected by a plurality of adapters, said data transfer method to be performed each of said adapter comprising:
holding step of temporarily storing data transmitted through a given one of said fraction amount said plurality of fractions of said transmission path; and
outputting step of outputting data held in said holding step to other fraction of the transmission path.

36. A data transfer method as set forth in claim 35, which further comprises selecting step for selectively controlling one of said held data and data output by the module corresponding to own adapter, for outputting to said other fraction of the transmission path.

37. A data transfer method as set forth in claim 36, wherein said data includes destination information indicative of the module to receive data, and output control in said selection step is performed to said fraction of the transmission path depending upon said destination information.

38. A data transfer method as set forth in claim 35, which further comprises transfer control step of performing intervention of a transfer demand for said data output from respective of said plurality of modules.

39. A data transfer method as set forth in claim 38, wherein, in said transfer control step, intervention of the transfer demand is performed depending upon a preliminarily applied preference for respective of said plurality of modules.

40. A data transfer method as set forth in claim 38, wherein, in said transfer control step, intervention of the transfer demand is performed depending upon preference applied for said transfer demand per se output from respective of said plurality of modules.

41. A data transfer method for performing transfer of data in a data transfer system including a plurality of modules, a transmission path inputting and outputting data exchanged between said plurality of modules and a plurality of adapters respectively provided corresponding to said plurality of modules and controlling input and output of data for said transmission path, said transmission path being divided into a plurality of fractions of the transmission path for placing each fraction between said plurality of modules, and said fractions of said transmission path being connected by a plurality of adapters, said data transfer method in said data transfer system comprising:
holding step of temporarily storing data transmitted through a given one of said fraction amount said plurality of fractions of said transmission path; and
outputting step of outputting data held in said holding step to other fraction of the transmission path.

42. A data transfer method as set forth in claim 41, which further comprises transfer control step of performing intervention of a transfer demand for said data output from respective of said plurality of modules.

43. A data transfer method as set forth in claim 42, wherein, in said transfer control step, intervention of the transfer demand is performed depending upon a preliminarily applied preference for respective of said plurality of modules.

44. A data transfer method as set forth in claim 42, wherein, in said transfer control step, intervention of the transfer demand is performed depending upon preference applied for said transfer demand per se output from respective of said plurality of modules.

45. A data transfer method in a data transfer system including a plurality of modules, a plurality of storage elements storing data output from said plurality of modules, and switching means for controlling connection state between said plurality of modules and said plurality of storage elements, said data transfer method comprising:
connection step of connecting one of said plurality of modules and one of said plurality of storage element by said switching means; and
step of exchanging of data being performed between the module and the storage element connected.

46. A data transfer method as set forth in claim 45, wherein in said connection step, one of said plurality of modules transmitting data and one of said plurality of storage elements storing no effective data are connected.

47. A data transfer method as set forth in claim 46, wherein, in said connection step, connecting condition is controlled depending upon the demand from the module outputting said data.

48. A data transfer method as set forth in claim 45, wherein connection is performed with reference to a module management table holding information indicative of correspondence in exchanging data between modules to exchange said data and a memory management table holding information indicative of use condition of respective of said plurality of storage elements.

49. A data transfer method in a data transfer system including a plurality of modules, a plurality of storage elements storing data output from said plurality of modules, and switching means for controlling connection state between said plurality of modules and said plurality of storage elements, said data transfer method comprising:
connection step of connecting two of modules or one of module and one of storage elements among said plurality of modules and a plurality of storage elements; and
step of exchanging of data being performed between the module and the storage element connected.

50. A data transfer method as set forth in claim 49, wherein in said connection step, one of said plurality of modules transmitting data and module to receive the data are connected.

51. A data transfer method as set forth in claim 49, wherein in said connection step, one of said plurality of modules transmitting data and one of said plurality of storage elements storing no effective data are connected.

52. A data transfer method as set forth in claim 49,wherein, in said connection step, connecting condition is controlled depending upon the demand from the module outputting said data.

53. A data transfer method as set forth in claim 49, wherein connection is performed with reference to a module management table holding information indicative of correspondence in exchanging data between modules to exchange said data and a memory management table holding information indicative of use condition of respective of said plurality of storage elements.

54. An integrated circuit as set forth in claim 2, wherein said data holding means is a flip-flop.

55. An integrated circuit as set forth in claim 2, wherein said data holding means is a semiconductor memory.

56. An integrated circuit as set forth in claim 1, wherein said plurality of adapter includes re-timing means for outputting the output of said selecting means after one holding temporarily.

57. An integrated circuit as set forth in claim 56, wherein said re-timing means is a flip-flop for temporarily output of said selecting means with taking a system clock as a clock.

58. An integrated circuit as set forth in claim 1, wherein said plurality adapters performs inputting and outputting of data with respect to a predetermined time slot in said transmission path.

59. An integrated circuit as set forth in claim 58, wherein each of said plurality of adapters includes a counter, and said time slot is determined depending upon the counted value of said counter.

60. An integrated circuit as set forth in claim 10, wherein said data holding means is a flip-flop.

61. An integrated circuit as set forth in claim 10, wherein said data holding means is a semiconductor memory.

62. An integrated circuit as set forth in claim 9, wherein said plurality of adapter includes re-timing means for outputting the output of said selecting means after one holding temporarily.

63. An integrated circuit as set forth in claim 62, wherein said re-timing means is a flip-flop for temporarily output of said selecting means with taking a system clock as a clock.

64. An integrated circuit as set forth in claim 9, wherein said plurality adapters performs inputting and outputting of data with respect to a predetermined time slot in said transmission path.

65. An integrated circuit as set forth in claim 64, wherein each of said plurality of adapters includes a counter, and said time slot is determined depending upon the counted value of said counter.
